# EUROPÄISCHE PATENTSCHRIFT

(11) **EP 1 436 447 B1**
(45) Veröffentlichungstag und Bekanntmachung des Hinweises auf die Patenterteilung: **05.01.2005**
(21) Anmeldenummer: 02782894.6
(22) Anmeldetag: 12.10.2002
(51) Int. Cl.: C25B 1/12, C25B 9/00, C25B 15/00

(54) **DRUCKELEKTROLYSEUR UND VERFAHREN ZUM BETRIEB EINES SOLCHEN**
PRESSURE ELECTROLYSER AND METHOD FOR OPERATING ONE SUCH ELECTROLYSER
ELECTROLYSEUR SOUS PRESSION, ET PROCEDE POUR FAIRE FONCTIONNER UN TEL ELECTROLYSEUR

(30) Priorität: 15.10.2001 DE 10150557
(43) Veröffentlichungstag der Anmeldung: 14.07.2004
(73) Patentinhaber: Gesellschaft für Hochleistungselektrolyseure zur Wasserstofferzeugung MBH, 85521 Ottobrunn (DE)
(72) Erfinder: BRAND, Rolf, August, 83052 Bruckmühl (DE); D'ERASMO, Pietro, N-3670 Notodden (NO); HOFMANN, Hans, 63165 Mühlheim (DE); RÄMISCH, Marko, 85521 Ottobrunn (DE)
(74) Vertreter: Winter, Josef
(86) Internationale Anmeldenummer: PCT/EP2002/011436
(87) Internationale Veröffentlichungsnummer: WO 2003/033768

(56) Entgegenhaltungen:
- EP-A- 0 806 498
- DE-U- 29 607 767

## Beschreibung

Die Erfindung betrifft einen Druckelektrolyseur nach dem Oberbegriff des Anspruchs 1, sowie ein Verfahren zum Betrieb eines solchen.

Zur elektrolytischen Aufspaltung von Wasser in Wasserstoff und Sauerstoff sind Druckelektrolyseure bekannt, die einen Druckbehälter und einen eine Anzahl von in Form eines Stapels zusammengefassten Elektrolysezellen enthaltenden, in dem Druckbehälter angeordneten Elektrolysezellenblock umfassen. Die Elektrolysezellen enthalten jeweilige Anoden und Kathoden und es ist ein Laugenkreistaufsystem zur Zuführung eines Anolyten zu den Anoden und zur Zuführung eines Katholyten zu den Kathoden vorgesehen und der Elektrolysezellenblock umfasst ein gegen das Innere des Druckbehälters abgedichtetes Gehäuse.

Ein solcher Druckelektrolyseur ist aus der DE 25 48 699 C3 bekannt. Bei diesem bekannten Druckelektrolyseur sind zusätzlich zu dem Elektrolysezellenblock auch Einrichtungen zur Reinigung, Kühlung und Umwälzung des Elektrolyten in dem Druckbehälter angeordnet.

Die Aufgabe der Erfindung ist es einen verbesserten Druckelektrolyseur zu schaffen. Weiterhin soll ein verbessertes Verfahren zum Betrieb eines solchen Druckelektrolyseurs angegeben werden.

Vorrichtungsmäßig wird die gestellte Aufgabe durch den im Anspruch 1 angegebenen Druckelektrolyseur gelöst.

Vorteilhafte Weiterbildungen des erfindungsgemäßen Druckelektrolyseurs sind in den Unteransprüchen angegeben.

Verfahrensmäßig wird die gestellte Aufgabe durch das im Anspruch 41 angegebene Verfahren gelöst. Vorteilhafte Weiterbildungen des erfindungsgemäßen Verfahrens sind in den Unteransprüchen angegeben.

Durch die Erfindung wird ein Druckelektrolyseur mit einem Druckbehälter und einem eine Anzahl von in Form eines Stapels zusammengefassten Elektrolysezellen enthaltenden, in dem Druckbehälter angeordneten Elektrolysezellenblock geschaffen. Die Elektrolysezellen enthalten jeweilige Anoden und Kathoden und es ist ein Laugenkreislaufsystem zur Zuführung eines Anolyten zu den Anoden und zur Zuführung eines Katholyten zu den Kathoden vorgesehen. Der Elektrolysezellenblock umfasst ein gegen das Innere des Druckbehälters abgedichtetes Gehäuse. Erfindungsgemäß ist es vorgesehen, dass das Gehäuse des Elektrolysezellenblocks zusammen mit dem Druckbehälter mindestens zwei voneinander getrennte Räume bildet, welche Bestandteil des Laugenkreislaufsystems sind und die durch das Gehäuse gegen die Elektrolysezellen und durch den Druckbehälter gegen die Umgebung begrenzt sind. Ein Vorteil des erfindungsgemäßen Druckelektrolyseurs ist der einfache Aufbau des Laugenkreislaufsystems. Ein anderer Vorteil ist der geringe Platzbedarf den der erfindungsgemäße Druckelektrolyseur erfordert.

Gemäß einer besonders bevorzugten Ausführungsform des erfindungsgemäßen Druckelektrolyseurs ist einer der voneinander getrennten Räume Bestandteil eines Anolytkreislaufs und der andere der voneinander getrennten Räume ist Bestandteil eines Katholytkreislaufs. Ein Vorteil dieser Ausführungsform ist, dass durch eine Trennung von Anolyt- und Katholytkreislauf bessere Gasreinheiten und damit ein größerer Lastregelbereich erzielbar sind.

Gemäß einer besonders bevorzugten Ausführungsform des erfindungsgemäßen Druckelektrolyseurs ist es vorgesehen, dass die voneinander getrennten Räume durch Trennwände voneinander getrennt sind, die sich zwischen dem Gehäuse und dem Druckbehälter erstrecken.

Gemäß einer bevorzugten Ausführungsform hat der Druckbehälter die Form eines Zylinders und der Elektrolysezellenblock ist mit seiner Längsachse parallel zur Achse des Zylinders in dem Druckbehälter angeordnet.

Gemäß einer weiteren bevorzugten Ausführungsform des erfindungsgemäßen Druckelektrolyseurs erstrecken sich die Trennwände parallel zur Achse des Zylinders zwischen dem Gehäuse und dem Druckbehälter.

Gemäß einer besonders vorteilhaften Ausführungsform des erfindungsgemäßen Druckelektrolyseurs ist das Gehäuse des Elektrolysezellenblocks durch eine Anzahl von aneinandergestapelten Zellrahmen der Elektrolysezellen gebildet.

Gemäß einer vorteilhaften Weiterbildung hiervon ist es vorgesehen, dass jeweils jede Anode einen eigenen Anodenzellrahmen und jeweils jede Kathode einen eigenen Kathodenzellrahmen hat, und dass die Anodenzellrahmen eine Verbindung der Anoden mit dem Raum, der Bestandteil des Anolytkreislaufs ist, herstellende Durchgänge aufweisen und die Kathodenzellrahmen eine Verbindung der Kathoden mit dem Raum, der Bestandteil des Katholytkreislaufs ist, herstellende Durchgänge aufweisen.

Gemäß einer anderen vorteilhaften Ausgestaltung ist es vorgesehen, dass der Elektrolysezellenblock mit seiner Längsrichtung im wesentlichen horizontal angeordnet ist, und dass der durch das Gehäuse des Elektrolysezellenblocks und den Druckbehälter begrenzte Raum vertikal in Längsrichtung des Elektrolysezellenblocks in die beiden voneinander getrennten Räume unterteilt ist.

Gemäß einer besonders vorteilhaften Weiterbildung der beiden letztgenannten Ausführungsformen ist es vorgesehen, dass die eine Verbindung mit den Anoden herstellenden Durchgänge jeweils an der Oberseite und an der Unterseite der Anodenzellrahmen mit dem einen der voneinander getrennten Räume, der Bestandteil des Anolytkreislaufs ist, in Verbindung stehen, und dass die eine Verbindung mit dem Kathoden herstellenden Durchgänge jeweils an der Oberseite und an der Unterseite der Kathodenzellrahmen mit dem anderen der voneinander getrennten Räume, der Bestandteil des Katholytkreislaufs ist, in Verbindung stehen. Der Vorteil hiervon ist es, dass der Laugekreislauf selbsttätig durch einen Gaslifteffekt der in den Zellen aufsteigenden Gase und die geringere Dichte des Lauge/Gas-Gemischs in den Zellen gegenüber den entgasten Laugesäulen außerhalb der Zellen ohne eine zusätzliche Laugekreislaufpumpe erfolgen kann. In den beiden voneinander getrennten Räumen sammeln sich an deren Oberseite die Produktgase Sauerstoff bzw. Wasserstoff.

Gemäß einer anderen vorteilhaften Ausgestaltung des erfindungsgemäßen Druckelektrolyseurs sind innerhalb des Druckbehälters wesentliche Bestandteile des Laugenkreislaufsystems, insbesondere Gasabscheider und/oder Laugenkühler vorgesehen. Der Vorteil hiervon ist ein besonders platzsparender, kompakter Aufbau des Druckelektrolyseurs.

Gemäß einer weiteren vorteilhaften Ausgestaltung ist eine der Trennwände unterhalb des Elektrolysezellenblocks angeordnet und bildet gleichzeitig ein mechanisches Auflager für denselben.

Eine besonders vorteilhafte Ausgestaltung des erfindungsgemäßen Druckelektrolyseurs sieht es vor, dass die Anoden und Kathoden von einem entlang ihrem Umfang verlaufenden Dichtungselement umgeben sind, weiches im Bereich der Anode bzw. der Kathode einen seitlichen Abschluss der Elektrolysezelle bildet und zwischen die Zellrahmen abdichtend eingefügt ist.

Eine besonders bevorzugte Ausführungsform hiervon sieht es vor, dass die Anode und die Kathode einer Elektrolysezelle jeweils getrennt in einem Dichtungselement umgeben sind.

Vorzugsweise sind die Dichtungselemente von Anode und Kathode gemeinsam zwischen zwei aufeinanderfolgenden Zellrahmen abdichtend eingefügt.

Vorzugsweise bilden die Dichtungselemente auch einen seitlichen Abschluss der Elektrolysezelle an einem zwischen der Anode und der Kathode angeordneten Diaphragma.

Vorzugsweise ist das Diaphragma zwischen dem Dichtungselement der Anode und dem Dichtungselement der Kathode abdichtend eingefügt.

Vorzugsweise sind die Dichtungselemente am Umfang der Anode und/oder der Kathode rahmenförmig verlaufend angeordnet.

Gemäß einer bevorzugten Ausführungsform ist es vorgesehen, dass die Dichtungselemente um den Rand von Anode und/oder Kathode von der Vorderseite zur Rückseite derselben herumgeführt ausgebildet sind.

Gemäß einer besonders vorteilhaften Ausführungsform hiervon sind die Dichtungselemente mit einer oder mehreren entlang dem Umfang von Anode bzw. Kathode verlaufenden Dichtungslippen versehen, welche an einer Dichtungsfläche des Anodenzellrahmens bzw. des Kathodenzellrahmens abdichtend anliegen.

Vorzugsweise ist es hierbei vorgesehen, dass die Dichtungslippen in einer Richtung senkrecht zur Fläche von Anode bzw. Kathode vorspringen, und dass die Dichtungsflächen des Anodenzellrahmens bzw. des Kathodenzellrahmens parallel zur Fläche von Anode bzw. Kathode verlaufend ausgebildet sind.

Die Dichtungselemente sind vorzugsweise aus einem elastomeren Material hergestellt.

Hierbei ist es insbesondere vorteilhaft, wenn die Dichtungselemente durch Umspritzen des Randes von Anode bzw. Kathode mit dem elastomeren Material hergestellt sind.

Gemäß einer vorteilhaften Weiterbildung des erfindungsgemäßen Druckelektrolyseurs sind zwei benachbarte Elektrolysezellen durch ein Bipolarblech voneinander getrennt, welches von einem entlang seinem Umfang verlaufenden Dichtungselement umgeben ist, das im Bereich des Bipolarblechs einen seitlichen Abschluss der Elektrolysezelle bildet und zwischen die Zellrahmen der benachbarten Elektrolysezellen abdichtend eingefügt ist.

Vorzugsweise ist das Dichtungselement am Umfang des Bipolarblechs rahmenförmig verlaufend angeordnet.

Gemäß einer Ausführungsform ist das Dichtungselement an einer Seite des Bipolarblechs angeordnet.

Gemäß einer anderen Ausführungsform ist das Dichtungselement um den Rand des Bipolarblechs von der Vorderseite zur Rückseite desselben herumgeführt ausgebildet.

Gemäß einer bevorzugten Ausführungsform ist das Dichtungselement mit einer oder mehreren entlang dem Umfang des Bipolarblechs verlaufenden Dichtungslippen versehen, welche an einer Dichtungsfläche des Anodenzellrahmens bzw. des Kathodenzellrahmens oder an dem Bipolarblech selbst abdichtend anliegen.

Eine bevorzugte Ausführungsform hiervon sieht es vor, dass die Dichtungslippen in einer Richtung senkrecht zur Fläche des Bipolarblechs vorspringen, und dass die Dichtungsfläche des Anodenzellrahmens bzw. des Kathodenzellrahmens parallel zur Fläche des Bipolarblechs verlaufend ausgebildet ist.

Vorzugsweise ist das Dichtungselement aus einem elastomeren Material hergestellt.

Das Dichtungselement kann durch Umspritzen des Randes des Bipolarblechs mit dem elastomeren Material hergestellt sein.

Die separaten Räume im Druckbehälter sind gemäß einer vorteilhaften Ausbildung an einer geodätisch niedrigen Stelle miteinander verbunden, um einen Niveauausgleich zwischen Anolyt und Katolyt zu ermöglichen. Die Verbindung erfolgt durch eine außerhalb des Druckbehälters verlaufende Verbindungsleitung. Alternativ können die Räume innerhalb des Druckbehälters durch eine Öffnung oder eine Membran in der Trennung verbunden sein.

Zur elektrischen Isolierung besteht der Druckbehälter gemäß einer Ausführungsform aus einem elektrisch nicht leitenden Material. Alternativ sind die vom Gehäuse des Elektrolysezellenblocks und der Innenseite des Druckbehälters umfassten Räume jeweils durch eine Schale aus einem elektrisch isolierenden Material gekammert. Das Gehäuse des Elektrolysezellenblocks und/oder der Druckbehälter können auch mit einer elektrisch isolierenden Beschichtung oder Verkleidung versehen sein.

Die Gasabscheidung erfolgt innerhalb des Druckbehälters in geodätisch oberhalb des Zellelektrolyseblocks gelegenen Bereichen. Dabei ist es vorteilhaft, in den Gasabscheidungsbereichen Gaskoaleszierhilfen in Form von Gestricken und/oder Ultraschallgebern und/oder Strömungsumlenkungen anzuordnen.

Gemäß einer Weiterbildung des erfindungsgemäßen Druckelektrolyseurs ist ein Wasservorratsbehälter vorgesehen, der über eine ein Speisewasserfüllventil enthaltende Speisewasserfüllleitung mit einer Speisewasserquelle und über eine ein Speisewasserzulaufventil enthaltende Speisewasserzulaufleitung mit einem unteren Bereich eines der getrennten Räume verbunden ist und der über eine ein Bedrückungsventil enthaltende Bedrückungsleitung mit einem oberen Bereich des einen der getrennten Räume verbunden ist, und der weiterhin über eine ein Belüftungsventil enthaltende Belüftungsleitung gegen die Umgebung entlüftbar ist, wobei der obere Bereich des einen der getrennten Räume beim Betrieb des Druckelektrolyseurs mit einem der Produktgase gefüllt ist.

Gemäß einer vorteilhaften Ausführungsform hiervon ist es vorgesehen, dass der eine der getrennten Räume, mit dem der Wasservorratsbehälter über die Speisewasserzulaufleitung und über die Bedrückungsleitung verbunden ist, der einen Bestandteil des Elektrolytkreislauf bildende andere getrennte Raum ist.

Verfahrensmäßig wird die gestellte Aufgabe gelöst durch ein Verfahren zum Befüllen eines Druckelektrolyseurs der beiden letztgenannten Ausführungsformen mit den folgenden Verfahrensschritten:
a) Druckloses Befüllen des Wasservorratsbehälters bei geöffnetem Belüftungsventil und geschlossenem Bedrückungsventil und geschlossenem Speisewasserzulaufventil über die Speisewasserfüflleitung mit geöffnetem Speisewasserfüllventil,
b) Schließen des Belüftungsventils und des Speisewasserfüllventils,
c) Öffnen des Bedrückungsventils. um den Wasservorratsbehälter über die Bedrückungsleitung auf den im Druckbehälter herrschenden Druck zu bringen,
d) Öffnen des Speisewasserzulaufventils, um Speisewasser aus dem Vorratsbehälter in den Druckbehälter zu dosieren,
e) Schließen des Speisewasserzulaufventils.

Vorzugsweise erfolgt das Zudosieren des Speisewassers aus dem Vorratsbehälter in den Druckbehälter unter Schwerkraftwirkung, wobei der Wasservorratsbehälter räumlich oberhalb des Druckbehälters angeordnet ist.

Alternativ hierzu kann das Zudosieren des Speisewassers aus dem Wasservorratsbehälter in den Druckbehälter aber auch mittels einer in der Speisewasserzulaufleitung enthaltenen Speisewasserpumpe erfolgen, die dann vorteilhafterweise eine geringe Leistung haben kann.

Im folgenden werden bevorzugte Ausführungsbeispiele der Erfindung anhand der Zeichnung eriäutert. Es zeigen:
Figur 1 eine schematisierte geschnittene Draufsicht auf einen Druckelektrolyseur gemäß einem Ausführungsbeispiel der Erfindung;
Figur 2a) eine geschnittene seitliche Ansicht des in Figur 1 gezeigten Druckelektrolyseurs zur Darstellung des Anolytkreislaufs;
Figur 2b) eine Schnittansicht entsprechend Figur 2a) zur Darstellung des Katholytkreislaufs;
Figur 3 eine geschnittene Draufsicht auf einen Teil des Elektrolysezellenblocks zur Erläuterung der wichtigsten Bestandteile der Elektrolysezellen;
Figur 4 eine vergrößerte Ansicht des mit Z bezeichneten Details aus Figur 1 zur Erläuterung der Strömungsführung im Anolytkreislauf und Katholytkreislauf;
Figur 5a) bis c) Detaildarstellungen in unterschiedlichen Maßstabsverhältnissen zur Erläuterung der Abdichtung der Elektrolysezellen am Gehäuse des Elektrolysezellenblocks; und
Figur 6 eine schematisierte Blockdarstellung, welche zusätzliche Komponenten zum Füllen des Druckelektrolyseurs mit Speisewasser umfasst.

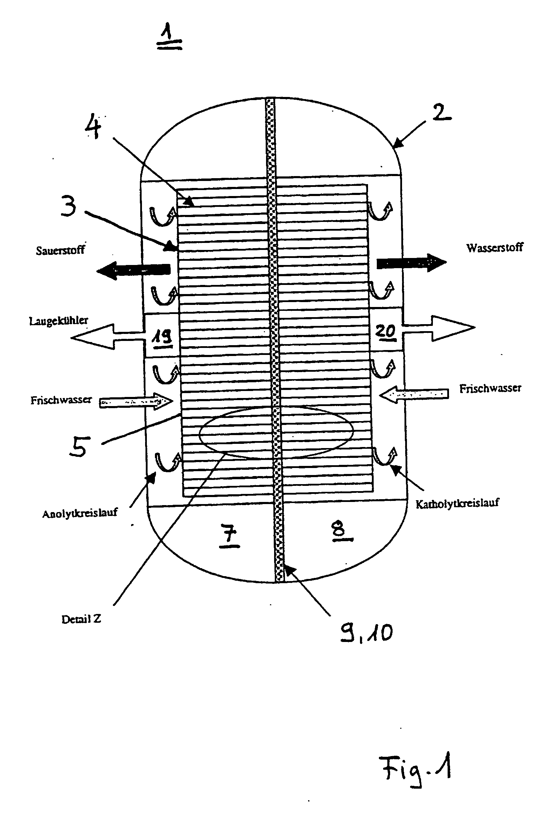

In Figur 1 umfasst ein insgesamt mit dem Bezugszeichen 1 bezeichneter Druckelektrolyseur einen Druckbehälter 2, in welchem ein Elektrolysezellenblock 3 angeordnet ist, der aus einer Anzahl von in Form eines Stapels zusammengefassten Elektrolysezellen 4 besteht.

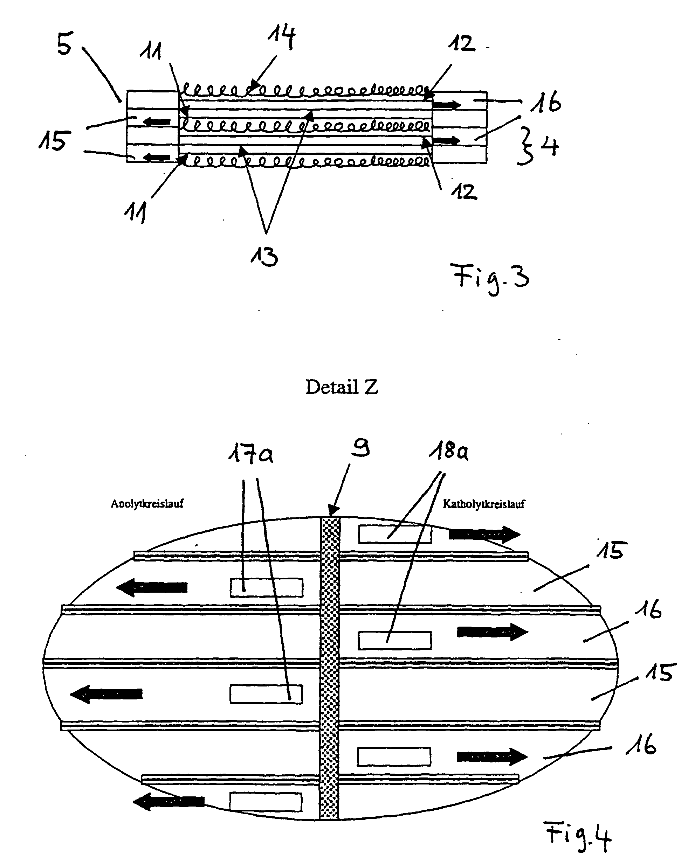

Wie Figur 3 näher zeigt, in welcher zwei Elektrolysezellen 4 mit ihren wesentlichen Bestandteilen dargestellt ist, umfasst eine Elektrolysezelle 4 eine Anode 11 und eine Kathode 12, welche durch ein dazwischen angeordnetes Diaphragma 13 voneinander getrennt sind. Zwischen zwei benachbarten Elektrolysezellen 4 befindet sich ein Bipolarblech 14, durch welches der anodenseitige Zellraum der einen Elektrolysezelle 4 vom kathodenseitigen Zellraum der benachbarten Elektrolysezelle 4 getrennt, dabei gleichzeitig aber miteinander elektrisch in Kontakt gehalten sind. Zur weiteren Ausbildung des Elektrolysezellenblocks 3 wird zum Beispiel auf die DE 197 81 442 C1 verwiesen. insbesondere ist daraus ersichtlich, wie die Stromzuführungen in den Zellenblock erfolgen können, auf welchem Potential die Endplatten und Druckbehälter liegen und wie die elektrische Isolierung erfolgt.

Wiederum bezugnehmend auf Figur 1 ist zu sehen, dass zwischen einem lediglich angedeuteten Gehäuse 5 des Elektrolysezellenblocks 3 und dem Druckbehälter 2 zwei Räume 7, 8 gebildet sind, welche durch Trennwände 9, 10 voneinander getrennt sind, die sich zwischen dem Gehäuse 5 und dem Druckbehälter 2 erstrecken. Die beiden voneinander getrennten Räume 7, 8 sind Bestandteil eines Laugenkreislaufsystems des Druckelektrolyseurs, wobei einer der voneinander getrennten Räume 7 Bestandteil eines Anolytkreislaufs ist und der andere der voneinander getrennten Räume 8 Bestandteil eines Katholytkreislaufs ist. Wie durch jeweilige Pfeife in Figur 1 schematisch gezeigt ist, werden als Reaktionsprodukte des in dem Druckelektrolyseur ablaufenden elektrolytischen Prozesses aus dem Anolytkreislauf in dem getrennten Raum 7 Sauerstoff und aus dem Katholytkreislauf in dem getrennten Raum 8 Wasserstoff gesammelt und abgezogen und jeweils durch eine entsprechende Menge Frischwasser ersetzt.

Wie in Figur 1 weiterhin schematisch gezeigt ist, sind in den getrennten Räumen 7, 8 innerhalb des Druckbehälters 2 weiterhin wesentliche Bestandteile des Laugenkreislaufsysterns angeordnet, etwa in Form von Laugenkühlern 19, 20. Der Druckbehälter 2 hat die Form eines Zylinders, in welchem der Elektrolysezellenblock 3 mit seiner Längsachse parallel zur Zylinderachse angeordnet ist. Die Trennwände 9, 10 erstrecken sich parallel zur Achse des Zylinders zwischen dem Gehäuse 5 des Elektrolysezellenblocks 3 und dem Druckbehälter 2.

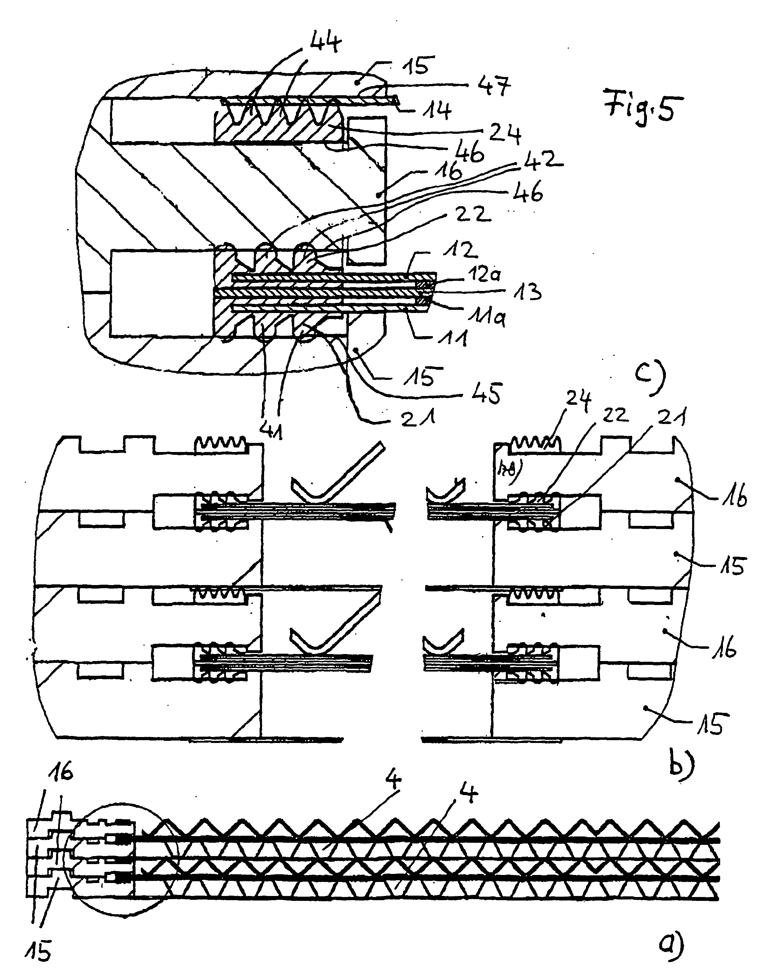

Wie aus dem in Figur 4 vergrößert dargestellten Detail Z von Figur 1 in Verbindung mit Figur 3 zu sehen ist, ist das Gehäuse 5 des Elektrolysezellenblocks 3 durch eine Anzahl von aufeinandergestapelten Zellrahmen 15, 16 der Elektrolysezellen 4 gebildet. Dabei ist jeweils jeder Anode 11 benachbart ein eigener Anodenzellrahmen 15 und jeweils jeder Kathode 12 benachbart ein eigener Kathodenzellrahmen 16 vorgesehen.

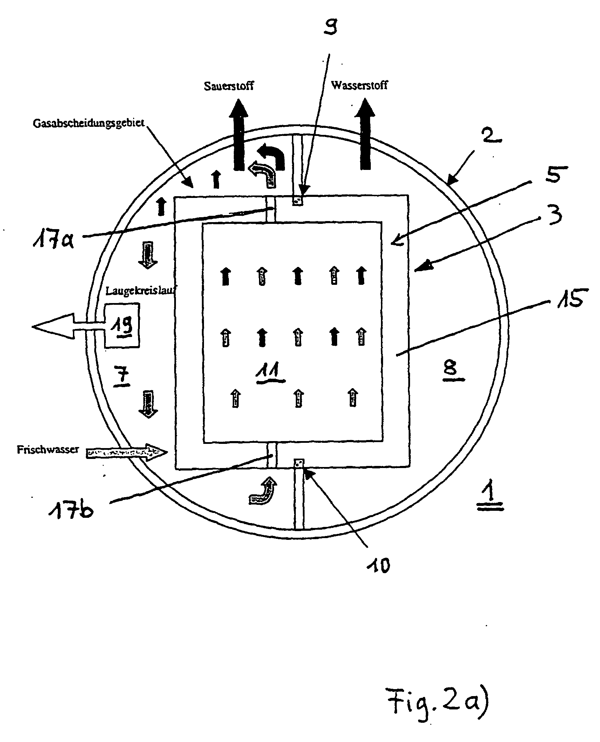

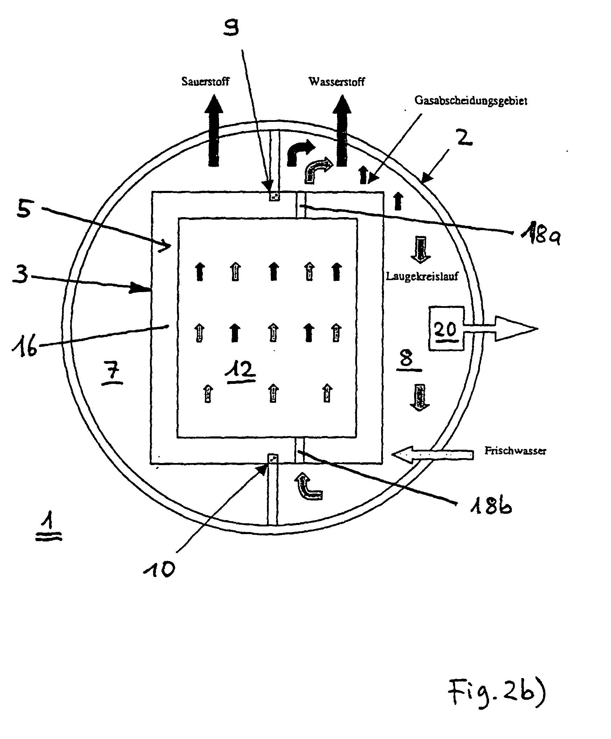

Wie die Figuren 2a) und b) zeigen, in denen der in Figur 1 gezeigte Druckelektrolyseur 1 jeweils in einer vertikalen Schnittansicht dargestellt ist, sind in den Anodenzellrahmen 15 Durchgänge 17a, b vorgesehen, welche eine Verbindung der Anodenseite mit dem Raum 7, der Bestandteil des Anolytkreislaufs ist, herstellen, vergleiche Figur 2a), und die Kathodenzellrahmen 16 weisen Durchgänge 18a, b auf, die eine Verbindung der Kathodenseite mit dem Raum 8, der Bestandteil des Katholytkreislaufs ist, herstellen.

Wie aus den Figuren 2a) und b) weiterhin ersichtlich ist, ist der durch das Gehäuse 5 des mit seiner Längsrichtung horizontal angeordneten Elektrolysezeltenblocks 3 und den Druckbehälter 2 begrenzte Raum vertikal und in Längsrichtung des Elektrolysezellenblocks 3 in die beiden voneinander getrennten Räume 7, 8 unterteilt. Die Durchgänge 17a, b, die eine Verbindung der Anoden 11 mit dem Anolytkreislauf herstellen, stehen jeweils an der Oberseite bzw. an der Unterseite der Anodenzellrahmen 15 mit dem einen der voneinander getrennten Räume 7, der Bestandteil des Anolytkreislaufs ist, in Verbindung, und die Durchgänge 18a, b, die eine Verbindung der Kathodenseite mit dem Katholytkreislauf herstellen, stehen jeweils an der Oberseite bzw. an der Unterseite der Kathodenzellrahmen 16 mit dem anderen der voneinander getrennten Räume 8, der Bestandteil des Katholytkreislaufs ist, in Verbindung. Der Raum im Druckbehälter 2 oberhalb des Elektrolysezellenblocks 3, der durch die Trennwand 9 mittig geteilt ist, dient auf der linken Seite der Trennwand 9, Raum 7, der Sauerstoffabtrennung und auf der rechten Seite der Trennwand 9, Raum 8, der Wasserstoffabtrennung. Im Gasabscheidungsgebiet oberhalb des Elektrolysezellenblocks 3 können Gaskoaleszierhilfen in Form von hydrophoben Gestricken, Ultraschallgebern, Strömungsumlenkungen und Schikanen angeordnet sein. Der Laugekreislauf auf beiden Seiten, also in dem Anolytkreislauf durch den Raum 7 und im Katholytkreislauf durch den Raum 8 erfolgt jeweils selbsttätig durch einen Gaslifteffekt auf Grund der in den Elektrolysezellen 4 aufsteigenden Gase und auf Grund der geringeren Dichte des Laugegasgemisch in den Zellen gegenüber den entgasten laugesäuien außerhalb in den getrennten Räumen 7, 8. Bei Bedarf kann eine Laugeumwälzpumpe vorgesehen werden, die jedoch nicht dargestellt ist. Eine der Trennwände 10 ist unterhalb des Elektrolysezellenblocks 3 angeordnet und bildet gleichzeitig ein mechanisches Auflager für denselben. Der Druckbehälter 2 dient damit als Traggestell für den Elektrolysezeilenblock 3.

Wie die Figuren 5a) bis c) in Darstellungen unterschiedlichen Maßstabs zeigen, sind die Anoden 11, die jeweils durch eine Anodenelektrode 11a kontaktiert werden, und die Kathoden 12, die jeweils durch eine Kathodenelektrode 12a kontaktiert werden, jeweils von einem entlang ihrem Umfang verlaufenden Dichtungselement 21, 22 umgeben, welches im Bereich der Anode 11 bzw. der Kathode 12 einen seitlichen Abschluss der Elektrolysezelle 4 bildet. Die Dichtungselemente 21, 22 sind zwischen die Zellrahmen 15, 16 einer Elektrolysezelle 4, d.h. zwischen den Anodenzellrahmen 15 und den Kathodenzellrahmen 16 abdichtend eingefügt.

Die Anode 11 und die Kathode 12 einer Elektrolysezelle 4 verfügt jeweils über ein eigenes getrenntes Dichtungselement 21 bzw. 22, und diese Dichtungselemente 21, 22 sind gemeinsam zwischen den besagten Zellrahmen 15, 16 einer Zelle 4 abdichtend eingefügt, wobei zwischen die Dichtungselemente 21, 22 das die Anode 11 und die Kathode 12 einer Elektrolysezelle 4 voneinander trennende Diaphragma 13 abdichtend eingefügt ist. Dadurch bilden die Dichtungselemente 21, 22 auch einen seitlichen Abschluss der Elektrolysezelle 4 an dem Diaphragma 13. Die Dichtungselemente 21, 22 sind in Form von Rahmen am Umfang der Anode 11 bzw. der Kathode 12 verlaufend vorgesehen.

Wie die vergrößerte Darstellung in Figur 5c) zeigt, sind die Dichtungselemente 21, 22 um den Rand der Anode 11 bzw. der Kathode 12 von der Vorderseite zur Rückseite derselben herumgeführt ausgebildet.

Wie die Figuren 5b) und c) zeigen, sind die Dichtungselemente 21, 22 mit mehreren entlang bzw. parallel dem Umfang der Anode 11 bzw. der Kathode 12 verlaufenden Dichtungslippen 41, 42 versehen, welche in einer Richtung senkrecht zur Fläche von Anode 11 bzw. Kathode 12 vorspringen und an einer Dichtungsfläche 45 des Anodenzellrahmens 15 bzw. einer Dichtungsfläche 46 des Kathodenzellrahmens 16 abdichtend anliegen, wobei diese Dichtungsflächen 45, 46 parallel zur Fläche von Anode 11 bzw. Kathode 12 verlaufend ausgebildet sind.

Die Dichtungselemente 21, 22 sind aus einem elastomeren Material hergestellt und durch Umspritzen des Randes der Anode 11 bzw. der Kathode 12 gebildet.

Wie die Figuren 5a) bis c) weiterhin zeigen, ist auch das zwei benachbarte Elektrolysezellen 4 voneinander trennende Bipolarblech 14 zwischen die Zellrahmen 15, 16 zweier benachbarter Elektrolysezellen 4 abdichtend eingefügt, d.h. zwischen den Anodenzellrahmen 15 der einen Elektrolysezelle 4 und den Kathodenzellrahmen 16 der benachbarten Elektrolysezelle 4.

Das Bipolarblech 14 ist von einem rahmenförmig entlang seinem Umfang verlaufenden Dichtungselement 24 umgeben, das im Bereich des Bipolarblechs 14 einen seitlichen Abschluss der Elektrolysezelle 4 bildet und abdichtend zwischen die Zellrahmen 15, 16 der benachbarten Elektrolysezellen 4 eingefügt ist.

Wie die vergrößerte Darstellung in Figur 5c) zeigt, ist das Dichtungselement 24 an einer Seite des Bipolarblechs 14 angeordnet und ist mit mehreren entlang bzw. parallel dem Umfang des Bipolarblechs 14 verlaufenden Dichtungslippen 44 versehen, welche an dem Bipolarblech 14 selbst abdichtend anliegen. Die Dichtungslippen 44 springen in einer Richtung senkrecht zur Fläche des Bipolarblechs 14 vor. Die Zellrahmen 15, 16, zwischen denen das Bipolarblech 14 zusammen mit seinem Dichtungselement 24 abdichtend eingefügt ist, verfügen über jeweilige Dichtungsflächen 47, 48, die parallel zur Fläche des Bipolarblechs 14 verlaufend ausgebildet sind und an denen das Dichtungselement 24 bzw. das Bipolarblech 14 abdichtend anliegen. Das Dichtungselement 24 ist aus einem elastomeren Material hergestellt.

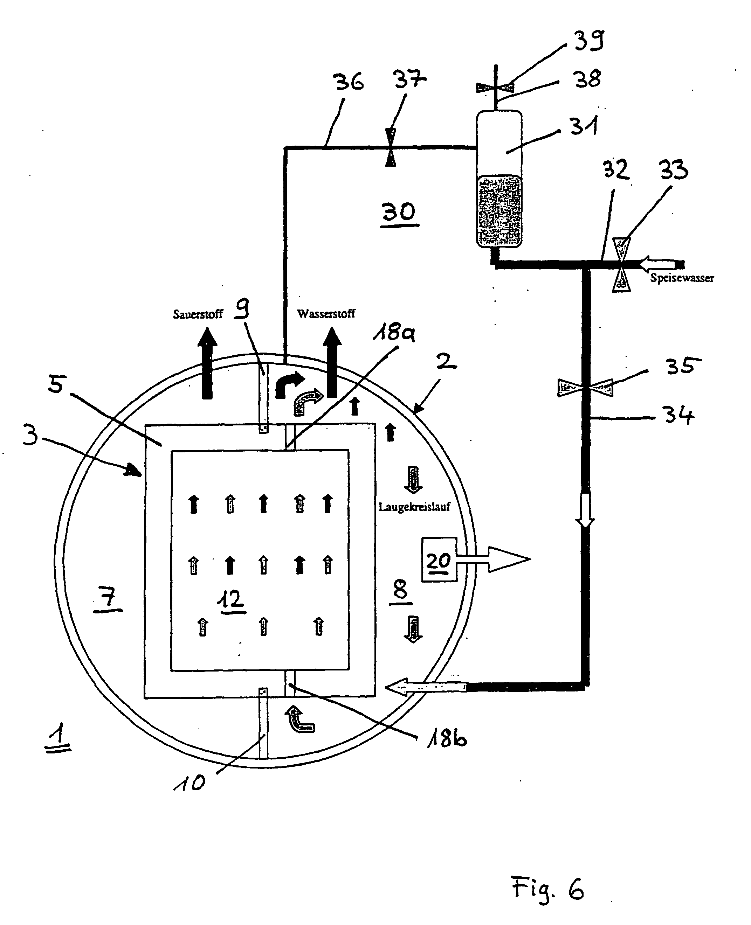

Nunmehr übergehend zu Figur 6 soll eine vorteilhafte Anordnung zum Befüllen des Druckelektrolyseurs 1 mit Speisewasser und ein entsprechendes Verfahren beschrieben werden. Es ist ein Wasservorratsbehälter 31 vorgesehen, der über eine ein Speisewasserfüllventil 33 enthaltende Speisewasserfüllleitung 32 mit einer Speisewasserquelle und über eine ein Speisewasserzulaufventil 35 enthaltende Speisewasserzulaufleitung 34 mit einem unteren Bereich des getrennten Raumes 8 verbunden und weiterhin über eine ein Bedrückungsventil 37 enthaltende Bedrückungsleitung 36 mit einem oberen Bereich des getrennten Raumes 8 verbunden ist. Weiterhin ist der Wasservorratsbehälter 31 über eine ein Belüftungsventil 39 enthaltende Belüftungsleitung 38 gegen die Umgebung entlüftbar. Der obere Bereich des getrennten Raumes 8, mit dem die Bedrückungsleitung 36 verbunden ist, ist beim Betrieb des Druckelektrolyseurs 1 mit unter Druck stehendem Wasserstoff als Produktgas gefüllt. Das Verfahren zum Befüllen des Druckelektrolyseurs 1 umfasst die folgenden Verfahrensschritte:
a) Zunächst erfolgt ein druckloses Befüllen des Wasservorratsbehätters 31 bei geöffnetem Belüftungsventil 39 und geschlossenem Bedrückungsventil 37 und geschlossenem Speisewasserzulaufventil 35 über die Speisewasserfüllleitung 32 mit geöffnetem Speisewasserfüllventil 33.
b) Dann werden das Belüftungsventil 39 und das Speisewasserfüllventil 33 geschlossen.
c) Sodann erfolgt ein Öffnen des Bedrückungsventils 37, um den Wasservorratsbehälter 31 über die Bedrückungsleitung 36 auf den im Druckbehälter 2 herrschenden Druck zu bringen.
d) Schließlich wird das Speisewasserzulaufventil 35 geöffnet, um Speisewasser aus den Wasservorratsbehälter 31 in den Druckbehälter 2 zu dosieren.
e) Mit dem Schließen des Speisewasserzulaufventils 35 ist der Füllvorgang dann abgeschlossen.

Das Zudosieren des Speisewassers aus dem Wasservorratsbehälter 31 in den Druckbehälter 2 kann unter Schwerkraftwirkung erfolgen, wobei der Wasservorratsbehälter 31 räumlich oberhalb des Druckbehälters 2 angeordnet ist. Alternativ kann das Zudosieren des Speisewassers aus dem Wasservorratsbehälter 31 in den Druckbehälter 2 aber auch mittels einer in der Speisewasserzulaufleitung 34 enthaltenen Speisewasserpumpe erfolgen.

Im Betrieb stellen sich unterschiedliche Laugenkonzentrationen auf der Anolyt- und Katolytseite ein, was einen osmotischen Druckaufbau bewirkt, mit auf der Kathodenseite steigendem Laugestand. Der Konzentrationsunterschied ist durch einen Überschuss von Hydroxylionen auf der Kathodenseite bedingt, aufgrund dessen Wasser von der Anodenzur Kathodenseite strömt. Ein Konzentrationsausgleich zwischen Katolyt und Anolyt ist zwar grundsätzlich über die Zelldiaphragmen möglich. Aufgrund der begrenzten Porosität der Zelldiaphragmen ist ein vollständiger Ausgleich aber in der Regel nicht gegeben. Es kann deshalb vorgesehen sein, den Konzentrationsausgleich durch einen zusätzlichen Eintrag von Speisewasser in den Katolyten zu bewirken. Der Ausgleich kann durch eine Bohrung oder eine Membran in der Trennwand 9, 10 am Fuße des Elektrotytzellenblocks oder durch eine auf der Außenseite des Druckbehälters 2 liegende Verbindungsleitung erfolgen, die Anolyt- und Katolytraum verbindet. Zur Regelung der Durchströmung kann ein regelbares Ventil in der Verbindungsleitung vorgesehen sein. Die Verbindungsleitung ist vorzugsweise an einer geodätisch niedrig gelegenen Stelle vorzusehen, um zu verhindern, dass mit Gas beladenes Speisewasser ausgetauscht wird.

Bei ungenügender Isolierung der stromführenden Teile des Elektrolyseurs können unerwünschte Shuntströme auftreten, was zu vermeiden ist. Zur elektrischen Isolierung kann das Innere des Druckbehälters 2 mit einer nicht leitenden Auskleidung, z. B. einer Beschichtung versehen sein oder der Druckbehälter 2 selbst kann aus einem nicht leitenden Material hergestellt sein. Es können auch die Anoden- und Kathodenzellrahmen gegen das Innere des Druckbehälters 2 elektrisch isoliert werden. Die Isolierung kann dabei aus einem Material bestehen, das zugleich die Zellrahmen gegen den Angriff der Lauge schützt. Die Isolierung kann im weiteren aus isolierenden Schafen bestehen, die die Kammern für Anolyt und Katolyt bilden und dementsprechend die von der Außenseite des Elektrolysezellenblocks und der Innenseite des Druckbehälters 2 umfassten Räume einschließen.

### Bezugszeichenliste

- 1: Druckelektrolyseur
- 2: Druckbehälter
- 3: Elektrolysezellenblock
- 4: Elektrolysezellen
- 5: Gehäuse
- 7: Raum für Anolytkreislauf
- 8: Raum für Katholytkreislauf
- 9: Trennwand
- 10: Trennwand
- 11: Anode
- 11a: Anodenelektrode
- 12: Kathode
- 12a: Kathodenelektrode
- 13: Diaphragma
- 14: Bipolarblech
- 15: Anodenzellrahmen
- 16: Kathodenzellrahmen
- 17a,b: Durchgang
- 18a,b: Durchgang
- 19: Laugenkühler
- 20: Laugenkühler
- 21: Dichtungselement
- 22: Dichtungselement
- 24: Dichtungselement
- 30: Speisewasserfüllsystem
- 31: Wasservorratsbehälter
- 32: Speisewasserfüllleitung
- 33: Speisewasserfüllventil
- 34: Speisewasserzulaufleitung
- 35: Speisewasserzufaufventil
- 36: Bedrückungsleitung
- 37: Bedrückungsventil
- 38: Belüftungsleitung
- 39: Belüftungsventil
- 41: Dichtungslippen
- 41: Dichtungslippen
- 44: Dichtungslippen
- 45: Dichtungsfläche
- 46: Dichtungsfläche
- 47: Dichtungsfläche
- 48: Dichtungsfläche

## Patentansprüche

1. Druckelektrolyseur mit einem Druckbehälter (2) und einem eine Anzahl von in Form eines Stapels zusammengefassten Elektrolysezellen (4) enthaltenden, in dem Druckbehälter (2) angeordneten Elektrolysezellenblock (3), wobei die Elektrolysezellen (4) jeweilige Anoden (11) und Kathoden (12) enthalten und ein Laugenkreislaufsystem zur Zuführung eines Anolyten zu den Anoden (11) und zur Zuführung eines Katholyten zu den Kathoden (12) vorgesehen ist, und wobei der Elektrolysezellenblock (3) ein gegen das Innere des Druckbehälters (2) abdichtendes Gehäuse (5) umfasst, wobei das Gehäuse (5) des Elektrolysezellenblocks (3) zusammen mit dem Druckbehälter (2) mindestens zwei Räume (7, 8) bildet, welche Bestandteil des Laugenkreislaufsystems sind und die durch das Gehäuse (5) gegen die Elektrolysezellen (4) und durch den Druckbehälter (2) gegen die Umgebung begrenzt sind, **dadurch gekennzeichnet, dass** die Räume (7, 8) voneinander getrennt sind, und dass einer der voneinander getrennten Räume (7) Bestandteil eines Anolytkreislaufs ist, und dass ein anderer der voneinander getrennten Räume (8) Bestandteil eines Katholytkreistaufs ist.

2. Druckelektrolyseur nach Anspruch 1, **dadurch gekennzeichnet, dass** die voneinander getrennten Räume (7, 8) durch Trennwände (9, 10) voneinander getrennt sind, die sich zwischen dem Gehäuse (5) und dem Druckbehälter (2) erstrecken.

3. Druckelektrolyseur nach Anspruch 1 oder 2, **dadurch gekennzeichnet, dass** der Druckbehälter (2) die Form eines Zylinders hat, und dass der Elektrolysezellenblock (3) mit seiner Längsachse parallel zur Achse des Zylinders in dem Druckbehälter (2) angeordnet ist.

4. Druckelektrolyseur nach Anspruch 3, **dadurch gekennzeichnet, dass** die Trennwände (9, 10) sich parallel zur Achse des Zylinders zwischen dem Gehäuse (5) und dem Druckbehälter (2) erstrecken.

5. Druckelektrolyseur nach einem der Ansprüche 1 bis 4, **dadurch gekennzeichnet, dass** das Gehäuse (5) des Elektrolysezellenblocks (3) durch eine Anzahl von aufeinandergestapelten Zellrahmen (15, 16) der Elektrolysezellen (4) gebildet ist.

6. Druckelektrolyseur nach Anspruch 5, **dadurch gekennzeichnet, dass** jeweils jede Anode (11) einen eigenen Anodenzellrahmen (15) und jeweils jede Kathode (12) einen eigenen Kathodenzellrahmen (16) hat, und dass die Anodenzellrahmen (15) eine Verbindung der Anoden (11) mit dem Raum (7), der Bestandteil des Anolytkreislaufs ist, herstellende Durchgänge (17a, b) aufweisen und die Kathodenzellrahmen (16) eine Verbindung der Kathoden (12) mit dem Raum (8), der Bestandteil des Katholytkreislaufs ist, herstellende Durchgänge (18a, b) aufweisen.

7. Druckelektrolyseur nach einem der Ansprüche 1 bis 6, **dadurch gekennzeichnet, dass** der Elektrolysezellenblock (3) mit seiner Längsrichtung im wesentlichen horizontal angeordnet ist, und dass der durch das Gehäuse (5) des Elektrolysezellenblocks (3) und den Druckbehälter (2) begrenzte Raum vertikal in Längsrichtung des Elektrolysezellenblocks (3) in die beiden voneinander getrennten Räume (7, 8) unterteilt ist.

8. Druckelektrolyseur nach Anspruch 6 und 7, **dadurch gekennzeichnet, dass** die eine Verbindung mit den Anoden (11) herstellenden Durchgänge (17a, b) jeweils an der Oberseite und an der Unterseite der Anodenzellrahmen (15) mit dem einen der voneinander getrennten Räume (7), der Bestandteil des Anolytkreislaufs ist, in Verbindung stehen, und dass die eine Verbindung mit den Kathoden (12) herstellenden Durchgänge (18a, b) jeweils an der Oberseite und an der Unterseite der Kathodenzellrahmen (16) mit dem anderen der voneinander getrennten Räume (B), der Bestandteil des Katholytkreislaufs ist, in Verbindung stehen.

9. Druckelektrolyseur nach einem der Ansprüche 1 bis 8, **dadurch gekennzeichnet, dass** innerhalb des Druckbehälters (2) wesentliche Bestandteile des Laugenkreislaufsystems, insbesondere Gasabscheider und/oder laugenkühler (19, 20) vorgesehen sind.

10. Druckelektrolyseur nach Anspruch 7, 8 oder 9, **dadurch gekennzeichnet, dass** eine der Trennwände (10) unterhalb des Elektrolysezellenblocks (3) angeordnet ist und gleichzeitig ein mechanisches Auflager für denselben bildet.

11. Druckelektrolyseur nach einem der Ansprüche 5 bis 10, **dadurch gekennzeichnet, dass** die Anoden (11) und Kathoden (12) von einem entlang ihrem Umfang verlaufenden Dichtungselement (21, 22) umgeben sind, welches im Bereich der Anode (11) bzw. der Kathode (12) einen seitlichen Abschluss der Elektrolysezelle (4) bildet und zwischen die Zellrahmen (15, 16) abdichtend eingefügt ist.

12. Druckelektrolyseur nach Anspruch 11, **dadurch gekennzeichnet, dass** die Anode (11) und die Kathode (12) einer Elektrolysezelle (4) jeweils getrennt von einem Dichtungselement (21 bzw. 22) umgeben sind.

13. Druckelektrolyseur nach Anspruch 12, **dadurch gekennzeichnet, dass** die Dichtungselemente (21, 22) von Anode (11) bzw. Kathode (12) gemeinsam zwischen zwei aufeinanderfolgenden Zellrahmen (15, 16) abdichtend eingefügt sind.

14. Druckelektrolyseur nach Anspruch 11, 12 oder 13, **dadurch gekennzeichnet, dass** die Dichtungselemente (21, 22) auch einen seitlichen Abschluss der Elektrolysezelle (4) an einem zwischen der Anode (11) und der Kathode (12) angeordneten Diaphragma (13) bilden.

15. Druckelektrolyseur nach Anspruch 12, 13 oder 14, **dadurch gekennzeichnet, dass** das Diaphragma (13) zwischen dem Dichtungselement (21) der Anode (11) und dem Dichtungselement (22) der Kathode (12) abdichtend eingefügt ist.

16. Druckelektrolyseur nach einem der Ansprüche 11 bis 15, **dadurch gekennzeichnet, dass** die Dichtungselemente (21, 22) am Umfang der Anode (11) und/oder der Kathode (12) rahmenförmig verlaufend angeordnet sind.

17. Druckelektrolyseur nach einem der Ansprüche 11 bis 16, **dadurch gekennzeichnet, dass** die Dichtungselemente (21, 22) um den Rand von Anode (11) und/oder Kathode (12) von der Vorderseite zur Rückseite derselben herumgeführt ausgebildet sind.

18. Druckelektrolyseur nach Anspruch 17, **dadurch gekennzeichnet, dass** die Dichtungselemente (21, 22) mit einer oder mehreren entlang dem Umfang von Anode (11) bzw. Kathode (12) verlaufenden Dichtungslippen (41, 42) versehen sind, welche an einer Dichtungsfläche (45, 46) des Anodenzellrahmens (15) bzw. des Kathodenzellrahmens (16) abdichtend anliegen.

19. Druckelektrolyseur nach Anspruch 18, **dadurch gekennzeichnet, dass** die Dichtungslippen (41, 42) in einer Richtung senkrecht zur Fläche von Anode (11) bzw. Kathode (12) vorspringen, und dass die Dichtungsflächen (45, 46) des Anodenzellrahmens (15) bzw. des Kathodenzellrahmens (16) parallel zur Fläche von Anode (11) bzw. Kathode (12) verlaufend ausgebildet sind.

20. Druckelektrolyseur nach einem der Ansprüche 16 bis 19, **dadurch gekennzeichnet, dass** die Dichtungselemente (21, 22) aus einem elastomeren Material hergestellt sind.

21. Druckelektrolyseur nach Anspruch 20, **dadurch gekennzeichnet, dass** die Dichtungselemente (21, 22) durch Umspritzen des Randes von Anode (11) bzw. Kathode (12) mit dem elastomeren Material hergestellt sind.

22. Druckelektrolyseur nach einem der Ansprüche 5 bis 21, **dadurch gekennzeichnet, dass** zwei benachbarte Elektrolysezellen (4) durch ein Bipolarblech (14) voneinander getrennt sind, welches von einem entlang seinem Umfang verlaufendem Dichtungselement (24) umgeben ist, das im Bereich des Bipolarblechs (14) einen seitlichen Abschluss der Elektrolysezelle (4) bildet und zwischen die Zellrahmen (15, 16) der benachbarten Elektrolysezellen (4) abdichtend eingefügt ist.

23. Druckelektrolyseur nach Anspruch 22, **dadurch gekennzeichnet, dass** das Dichtungselement (24) am Umfang des Bipolarblechs (14) rahmenförmig verlaufend angeordnet ist.

24. Druckelektrolyseur nach Anspruch 22 oder 23, **dadurch gekennzeichnet, dass** das Dichtungselement (24) an einer Seite des Bipolarblechs (14) angeordnet ist.

25. Druckelektrolyseur nach Anspruch 22 oder 23, **dadurch gekennzeichnet, dass** das Dichtungselement (24) um den Rand des Bipolarblechs (14) von der Vorderseite zur Rückseite desselben herumgeführt ausgebildet ist.

26. Druckelektrolyseur nach einem der Ansprüche 22 bis 25, **dadurch gekennzeichnet, dass** das Dichtungselement (24) mit einer oder mehreren entlang dem Umfang des Bipolarblechs (14) verlaufenden Dichtungslippen (44) versehen, welche an einer Dichtungsfläche (47) des Anodenzellrahmens (15) bzw. des Kathodenzellrahmens (16) oder an dem Bipolarblech (14) selbst abdichtend anliegen.

27. Druckelektrolyseur nach Anspruch 26, **dadurch gekennzeichnet, dass** die Dichtungslippen (44) in einer Richtung senkrecht zur Fläche des Bipolarblechs (14) vorspringen, und dass die Dichtungsfläche (46, 47) des Anodenzellrahmens (15) bzw. des Kathodenzellrahmens (16) parallel zur Fläche des Bipolarblechs (14) verlaufend ausgebildet ist.

28. Druckelektrolyseur nach einem der Ansprüche 23 bis 27, **dadurch gekennzeichnet, dass** das Dichtungselement (24) aus einem elastomeren Material hergestellt ist.

29. Druckelektrolyseur nach Anspruch 28, **dadurch gekennzeichnet, dass** das Dichtungselement (24) durch Umspritzen des Randes des Bipolarblechs (14) mit dem elastomeren Material hergestellt ist.

30. Druckelektrolyseur nach einem der Ansprüche 1 bis 29, **dadurch gekennzeichnet, dass** die Räume (7, 8) im Druckbehälter (2) an einer geodätisch niedrigen Stelle miteinander verbunden sind, um einen Niveauausgleich zwischen Anolyt und Katolyt zu ermöglichen.

31. Druckelektrelyseur nach Anspruch 30, **dadurch gekennzeichnet, dass** die Räume (7, 8) durch eine außerhalb des Druckbehälters (2) verlaufende Verbindungsleitung verbunden sind.

32. Druckelektrolyseur nach Anspruch 30, **dadurch gekennzeichnet, dass** die Räume (7, 8) an einer geodätisch niedrig gelegenen Stelle innerhalb des Druckbehälters (2) über eine Öffnung oder eine Membran in der Trennung miteinander verbunden sind.

33. Druckelektrolyseur nach einem der Ansprüche 1 bis 32, **dadurch gekennzeichnet, dass** der Druckbehälter (2) aus einem elektrisch nicht leitenden Material besteht.

34. Druckelektrolyseur nach einem der Ansprüche 1 bis 32, **dadurch gekennzeichnet, dass** die vom Gehäuse (5) des Elektrolysezellenblocks (3) und der Innenseite des Druckbehälters (2) umfassten Räume (7, 8) jeweils durch eine Schale aus einem elektrisch isolierenden Material gekammert sind.

35. Druckelektrolyseur nach einem der Ansprüche 1 bis 32, **dadurch gekennzeichnet, dass** das Gehäuse (5) des Elektrolysezellenblocks (3) auf der den Räumen (7, 8) zugewandten Seiten und/oder der Druckbehälter (2) auf seiner Innenseite mit einer elektrisch isolierenden Beschichtung oder Verkleidung versehen ist.

36. Druckelektrolyseur nach Anspruch 9, **dadurch gekennzeichnet, dass** die Gasabscheidung in den Raum (7) und in den Raum (8) hinein im wesentlichen in geodätisch oberhalb des Zelletektrolyseblocks (3) gelegenen Bereichen erfolgt.

37. Druckelektrolyseur nach Anspruch 36, **dadurch gekennzeichnet, dass** in den Gasabscheidungsbereichen Gaskoaleszierhilfen in Form von Gestricken und/oder Ultraschallgebern und/oder Strömungsumlenkungen angeordnet sind.

38. Druckelektrolyseur nach einem der Ansprüche 1 bis 37, **dadurch gekennzeichnet, dass** ein Wasservorratsbehälter (31) vorgesehen ist, der über eine ein Speisewasserfüllventil (33) enthaltende Speisewasserfüflleitung (32) mit einer Speisewasserquelle und über eine ein Speisewasserzulaufventil (35) enthaltende Speisewasserzulaufleitung (34) mit einem unteren Bereich eines der getrennten Räume (7, 8) verbunden ist und der über eine ein Bedrückungsventil (37) enthaltende Bedrückungsleitung (36) mit einem oberen Bereich des einen der getrennten Räume (7, 8) verbunden ist, und der weiterhin über eine ein Belüftungsventil (39) enthaltende Belüftungsleitung (38) gegen die Umgebung entlüftbar ist, wobei der obere Bereich des einen der getrennten Räume (7, 8) beim Betrieb des Druckelektrolyseurs mit einem der Produktgase gefüllt ist.

39. Druckelektrolyseur nach Anspruch 38, **dadurch gekennzeichnet, dass** der eine der getrennten Räume, mit dem der Wasservorratsbehälter (31) über die Speisewasserzulaufleitung (34) und über die Bedrückungsleitung (36) verbunden ist, der einen Bestandteil des Katholytkreislaufs bildende andere getrennte Raum (8) ist.

40. Verfahren zum Befüllen eines Druckelektrolyseurs nach Anspruch 38 oder 39, **gekennzeichnet durch** die folgenden Verfahrensschritte:
a) druckloses Befüllen des Wasservorratsbehälters (31) bei geöffnetem Belüftungsventil (39) und geschlossenem Bedrückungsventil (37) und geschlossenem Speisewasserzulaufventil (35) über die Speisewasserfüllleitung (32) mit geöffnetem Speisewasserfüllventil (33),
b) Schließen des Belüftungsventils (39) und des Speisewasserfüllventils (33),
c) Öffnen des Bedrückungsventils (37), um den Wasservorratsbehälter (31) über die Bedrückungsleitung (36) auf den im Druckbehälter (2) herrschenden Druck zu bringen,
d) Öffnen des Speisewasserzulaufventils (35), um Speisewasser aus dem Wasservorratsbehätter (31) in den Druckbehälter (2) zu dosieren,
e) Schließen des Speisewasserzulaufventils (35).

41. Verfahren nach Anspruch 40, **dadurch gekennzeichnet, dass** das Zudosieren des Speisewassers aus dem Wasservorratsbehätter (31) in den Druckbehätter (2) unter Schwerkraftwirkung erfolgt, wobei der Wasservorratsbehälter (31) räumlich oberhalb des Druckbehälters (2) angeordnet ist.

42. Verfahren nach Anspruch 40, **dadurch gekennzeichnet, dass** das Zudosieren des Speisewassers aus dem Wasservorratsbehälter (31) in den Druckbehälter (2) mittels einer in der Speisewasserzulaufleitung (34) enthaltenen Speisewasserpumpe erfolgt.

## Claims

1. A pressure electrolyzer which comprises a pressure vessel (2) and an electrolytic-cell block (3) which is arranged in the pressure vessel (2) and contains a plurality of electrolytic cells (4) combined in the form of a stack, wherein the electrolytic cells (4) in each case contain anodes (11) and cathodes (12), and an electrolyte-circuit system is provided for supplying an anolyte to the anodes (11) and for supplying a catholyte to the cathodes (12), and wherein the electrolytic-cell block (3) comprises a housing (5) which is sealed relative to the interior of the pressure vessel (2), wherein the housing (5) of the electrolytic-cell block (3), together with the pressure vessel (2), forms at least two chambers (7, 8), which constitute a part of the electrolyte-circuit system and which are defined relative to the electrolytic cells (4) by the housing (5) and relative to the atmosphere by the pressure vessel (2), **characterized in that** the rooms (7, 8) are separated from each other and that one of the chambers (7), being separated from another chamber, constitutes a part of an anolyte circuit, and that another of the chambers (8), being separated from said one chamber, constitutes a part of a catholyte circuit.

2. A pressure electrolyzer according to claim 1, **characterized in that** the chambers (7, 8), which are separated from each other, are separated from each other by means of separating walls (9, 10) which extend between the housing (5) and the pressure vessel (2).

3. A pressure electrolyzer according to claim 1 or claim 2, **characterized in that** the pressure vessel (2) has the shape of a cylinder, and **in that** the electrolytic-cell block (3) is arranged with its longitudinal axis parallel with the axis of the cylinder in the pressure vessel (2).

4. A pressure electrolyzer according to claim 3, **characterized in that** the separating walls (9, 10) extend parallel with the axis of the cylinder between the housing (5) and the pressure vessel (2).

5. A pressure electrolyzer according to any of claims 1 to 4, **characterized in that** the housing (5) of the electrolytic-cell block (3) is composed of a plurality of cell frames (15, 16) of the electrolytic cells (4), which cell frames are stacked one on top of the other.

6. A pressure electrolyzer according to claim 5, **characterized in that**, in each case, each anode (11) has its own anode cell frame (15) and, in each case, each cathode (12) has its own cathode cell frame (16), and **in that** the anode cell frames (15) comprise passages (17a, b), which produce a connection between the anode (11) and the chamber (7) which constitutes a part of the anolyte circuit, and the cathode cell frames (16) comprise passages (18a, b), which produce a connection between the cathode (12) and the chamber (8) which constitutes a part of the catholyte circuit.

7. A pressure electrolyzer according to any of claims 1 to 6, **characterized in that** the electrolytic-cell block (3) is arranged with its longitudinal direction substantially horizontally, and **in that** the chamber which is defined by the housing (5) of the electrolytic-cell block (3) and the pressure vessel (2) is vertically subdivided in the longitudinal direction of the electrolytic-cell block (3) into the two chambers (7, 8) which are separated from each other.

8. A pressure electrolyzer according to claims 6 and 7, **characterized in that** the passages (17a, b) producing a connection with the anodes (11) are in communication, in each case, on the upper side and on the lower side of the anode cell frames (15) with the one of the chambers (7), which is separated from the other chamber and constitutes a part of the anolyte circuit, and **in that** the passages (18a, b) producing a connection with the cathodes (12) are in communication, in each case, on the upper side and on the lower side of the cathode cell frames (16) with the other of the chambers (8), which is separated from said one chamber and constitutes a part of the catholyte circuit.

9. A pressure electrolyzer according to any of claims 1 to 8, **characterized in that** essential components of the electrolyte-circuit system, in particular a gas separator and/or an electrolyte cooler (19, 20) are provided within the pressure vessel (2).

10. A pressure electrolyzer according to claim 7, claim 8 or claim 9, **characterized in that** one of the separating walls (10) is arranged below the electrolytic-cell block (3) and simultaneously forms a mechanical support for said block.

11. A pressure electrolyzer according to any of claims 5 to 10, **characterized in that** the anodes (11) and the cathodes (12) are encircled by a sealing element (21, 22), which extends about their periphery and forms a lateral end of the electrolytic cell in the region of the anode (11), respectively of the cathode (12), and which is sealingly fitted between the cell frames (15, 16).

12. A pressure electrolyzer according to claim 11, **characterized in that** the anode (11) and the cathode (12) of an electrolytic cell (4) are each separately encircled by a sealing element (21, respectively 22).

13. A pressure electrolyzer according to claim 12, **characterized in that** the sealing elements (21, 22) of the anode (11), respectively of the cathode (12), are jointly sealingly fitted between two successive cell frames (15, 16).

14. A pressure electrolyzer according to claim 11, claim 12 or claim 13, **characterized in that** the sealing elements (21, 22) also form a lateral end of the electrolytic cell (4) on a diaphragm (13) which is arranged between the anode (11) and the cathode (12).

15. A pressure electrolyzer according to claim 12, claim 13 or claim 14, **characterized in that** the diaphragm (13) is sealingly fitted between the sealing element (21) of the anode (11) and the sealing element (22) of the cathode (12).

16. A pressure electrolyzer according to any of claims 11 to 15, **characterized in that** the sealing elements (21, 22) are arranged about the periphery of the anode (11) and/or of the cathode (12) so as to extend in the manner of a frame.

17. A pressure electrolyzer according to any of claims 11 to 16, **characterized in that** the sealing elements (21, 22) are designed to be led about the edge of the anode (11) and/or the cathode (12) from the front side to the rear side of said anode and/or said cathode.

18. A pressure electrolyzer according to claim 17, **characterized in that** the sealing elements (21, 22) are provided with one or more sealing lips (41, 42), which extend about the periphery of the anode (11), respectively of the cathode (12), and which rest sealingly against a sealing face (45, 46) of the anode cell frame (15), respectively of the cathode cell frame (16).

19. A pressure electrolyzer according to claim 18, **characterized in that** the sealing lips (41, 42) project in a perpendicular direction relative to the flat side of the anode (11), respectively of the cathode (12), and **in that** the sealing faces (45, 46) of the anode cell frame (15), respectively of the cathode cell frame (16), are designed to extend parallel to the flat side of the anode (11), respectively of the cathode (12).

20. A pressure electrolyzer according to any of claims 16 to 19, **characterized in that** the sealing elements (21, 22) are produced from an elastomer.

21. A pressure electrolyzer according to claim 20, **characterized in that** the sealing elements (21, 22) are produced by extrusion-coating of the edge of the anode (11), respectively of the cathode (12), using the elastomer.

22. A pressure electrolyzer according to any of claims 5 to 21, **characterized in that** two adjacent electrolytic cells (4) are separated from each other by a bipolar metal sheet (14) which is encircled by a sealing element (24) which extends about the periphery of said bipolar metal sheet and which, in the region of the bipolar metal sheet (14), forms a lateral end of the electrolytic cell (4) and is sealingly fitted between the cell frames (15, 16) of the adjacent electrolytic cells (4).

23. A pressure electrolyzer according to claim 22, **characterized in that** the sealing element (24) is arranged to extend about the periphery of the bipolar metal sheet (14) in the manner of a frame.

24. A pressure electrolyzer according to claim 22 or claim 23, **characterized in that** the sealing element (24) is arranged on one side of the bipolar metal sheet (14).

25. A pressure electrolyzer according to claim 22 or claim 23, **characterized in that** the sealing element (24) is designed to be led about the edge of the bipolar metal sheet (14) from the front side to the rear side thereof.

26. A pressure electrolyzer according to any of claims 22 to 25, **characterized in that** the sealing element (24) is provided with one or more sealing lips (44) which extend about the periphery of the bipolar metal sheet (14) and rest sealingly against a sealing face (47) of the anode cell frame (15), respectively of the cathode cell frame (16), or against the bipolar metal sheet (14) itself.

27. A pressure electrolyzer according to claim 26, **characterized in that** the sealing lips (44) project in a perpendicular direction relative to the flat side of the bipolar metal sheet (14), and **in that** the sealing face (46, 47) of the anode cell frame (15), respectively of the cathode cell frame (16), is designed to extend parallel to the flat side of the bipolar metal sheet (14).

28. A pressure electrolyzer according to any of claims 23 to 27, **characterized in that** the sealing element (24) is produced from an elastomer.

29. A pressure electrolyzer according to claim 28, **characterized in that** the sealing element (24) is produced by extrusion-coating of the edge of the bipolar metal sheet (14), using the elastomer.

30. A pressure electrolyzer according to any of claims 1 to 29, **characterized in that** the chambers (7, 8) in the pressure vessel (2) are connected to each other at a geodetically low point, so as to permit an alignment of the levels between the anolyte and the catholyte.

31. A pressure electrolyzer according to claim 30, **characterized in that** the chambers (7, 8) are connected by a connecting pipe which extends outside the pressure vessel (2).

32. A pressure electrolyzer according to claim 30, **characterized in that** the chambers (7, 8) are linked to each other at a geodetically low point within the pressure vessel (2) via an opening or a membrane in the separating means.

33. A pressure electrolyzer according to any of claims 1 to 32, **characterized in that** the pressure vessel (2) is of an electrically nonconductive material.

34. A pressure electrolyzer according to any of claims 1 to 32, **characterized in that** each of the chambers (7, 8) defined by the housing (5) of the electrolytic-cell block (3) and the inner side of the pressure vessel (2) are encapsulated by a shell of an electrically insulating material.

35. A pressure electrolyzer according to any of claims 1 to 32, **characterized in that** the housing (5) of the electrolytic-cell block (3) is provided with an electrically insulating coating or lining on its side facing the chambers (7, 8) and/or the pressure vessel (2) is provided with an electrically insulating coating or lining on its inner side.

36. A pressure electrolyzer according to claim 9, **characterized in that** the separation of gas into the chamber (7) and into the chamber (8) takes place substantially in regions which are disposed geodetically above the electrolytic-cell block (3).

37. A pressure electrolyzer according to claim 36, **characterized in that** gas-coalescing aids, in the form of knit fabrics and/or ultrasonic transmitters and/or flow-deflecting means, are arranged in the regions of gas separation.

38. A pressure electrolyzer according to any of claims 1 to 37, **characterized in that** a water-supply tank (31) is provided, which tank is connected to a feed-water source via a feed-water filling pipe (32) comprising a feed-water fill-up valve (33), and to a bottom region of one of the separated chambers (7, 8) via a feed-water inflow pipe (34) comprising a feed-water inflow valve (35), and which is connected to a top region of the one of the separated chambers (7, 8) via a pressurizing pipe (36) comprising a pressurizing valve (37), and which, additionally, can be evacuated relative to the atmosphere via a ventilation pipe (38) comprising a ventilation valve (39), the top region of the one of the separated chambers (7, 8) being filled, during operation of the pressure electrolyzer, with one of the product gases.

39. A pressure electrolyzer according to claim 38, **characterized in that** the one of the separated chambers, to which the water-supply tank (31) is connected via the feed-water inflow pipe (34) and via the pressurizing pipe (36), is the other separated chamber (8) constituting a part of the catholyte circuit.

40. A method of filling a pressure electrolyzer according to claim 38 or claim 39, **characterized by** the following steps:
a) pressure-free filling of the water-supply tank (31) via the feed-water filling pipe (32) with the opened feed-water fill-up valve (33), while the ventilation valve (39) is open, the pressurizing valve (37) is closed and the feed-water inflow-valve (35) is closed,
b) closing the ventilation valve (39) and the feed-water fill-up valve (33),
c) opening the pressurizing valve (37), so as to bring the water-supply tank (31), via the pressurizing pipe (36), to the pressure prevailing in the pressure vessel (2),
d) opening the feed-water inflow valve (35), so as to admit metered quantities of feed water from the water-supply tank (31) into the pressure vessel (2),
e) closing the feed-water inflow valve (35).

41. Method according to claim 40, **characterized in that** the metered addition of the feed water from the water-supply tank (31) into the pressure vessel (2) takes place under gravity, the water-supply tank (31) being arranged spatially above the pressure vessel (2).

42. Method according to claim 40, **characterized in that** the metered addition of the feed water from the water-supply tank (31) into the pressure vessel (2) is carried out by means of a feed-water pump included in the feed-water inflow pipe (34).

## Revendications

1. Electrolyseur sous pression qui comprend un récipient sous pression (2) et un bloc de cellules électrolytiques (3) qui est agencé dans le récipient sous pression (2) et qui contient une pluralité de cellules électrolytiques (4) combinées sous forme d'un empilement, les cellules électrolytiques (4) contenant toutes des anodes (11) et des cathodes (12), un système à circuit d'électrolytes étant prévu pour délivrer un anolyte aux anodes (11) et pour délivrer un catholyte aux cathodes (12), le bloc de cellules électrolytiques (3) comprenant un logement (5) qui est rendu étanche par rapport à l'intérieur du récipient sous pression (2), le logement (5) du bloc de cellules électrolytiques (3) ainsi que le récipient sous pression (2) formant au moins deux chambres (7, 8) qui constituent une partie du système à circuit d'électrolytes et qui sont délimitées par rapport aux cellules électrolytiques (4) par le logement (5) et par rapport à l'atmosphère par le récipient sous pression (2), **caractérisé en ce que** les chambres (7, 8) sont séparées l'une de l'autre et **en ce que** l'une des chambres (7), séparée de l'autre chambre, constitue une partie d'un circuit d'anolyte et **en ce que** l'autre chambre (8), séparée de ladite première chambre, constitue une partie d'un circuit de catholyte.

2. Electrolyseur sous pression selon la revendication 1, **caractérisé en ce que** les chambres (7, 8) qui sont séparées l'une de l'autre sont séparées l'une de l'autre au moyen de parois de séparation (9, 10) qui s'étendent entre le logement (5) et le récipient sous pression (2).

3. Electrolyseur sous pression selon la revendication 1 ou 2, **caractérisé en ce que** le récipient sous pression (2) présente la forme d'un cylindre et **en ce que** l'axe longitudinal du bloc de cellules électrolytiques (3) est agencé dans le récipient sous pression (2) parallèlement à l'axe du cylindre.

4. Electrolyseur sous pression selon la revendication 3, **caractérisé en ce que** les parois de séparation (9, 10) s'étendent parallèlement à l'axe du cylindre situé entre le logement (5) et le récipient sous pression (2).

5. Electrolyseur sous pression selon l'une des revendications 1 à 4, **caractérisé en ce que** le logement (5) du bloc de cellules électrolytiques (3) est composé d'une pluralité de cadres (15, 16) des cellules électrolytiques (4), empilés les uns sur les autres.

6. Electrolyseur sous pression selon la revendication 5, **caractérisé en ce que** chaque anode (11) présente son propre cadre de cellule d'anode (15), **en ce que** chaque cathode (12) présente son propre cadre de cellule de cathode (16) et **en ce que** les cadres de cellule d'anode (15) comprennent des passages (17a, b) qui assurent la communication entre l'anode (11) et la chambre (7) qui constitue une partie du circuit d'anolyte et les cadres de cellule de cathode (16) comprennent des passages (18a, b) qui assurent la communication entre la cathode (12) et la chambre (8) qui constitue une partie du circuit de catholyte.

7. Electrolyseur sous pression selon l'une des revendications 1 à 6, **caractérisé en ce que** la direction longitudinale du bloc de cellules électrolytiques (3) est agencée essentiellement à l'horizontale et **en ce que** la chambre qui est délimitée par le logement (5) du bloc de cellules électrolytiques (3) et par le récipient sous pression (2) est subdivisée verticalement dans la direction longitudinale du bloc de cellules électrolytiques (3) en deux chambres (7, 8) qui sont séparées l'une de l'autre.

8. Electrolyseur sous pression selon les revendications 6 et 7, **caractérisé en ce que** sur le côté supérieur et sur le côté inférieur des cadres de cellules d'anode (15), les passages (17a, b) qui assurent la communication avec les anodes (11) sont toutes en communication avec l'une des chambres (7) qui est séparée de l'autre chambre et qui constitue une partie du circuit d'anolyte et **en ce que** sur le côté supérieur et sur le côté inférieur des cadres de cellules de cathode (16), les passages (18a, b) qui assurent la communication avec les cathodes (12) sont tous en communication avec l'autre chambre (8) qui est séparée de ladite première chambre et qui constitue une partie du circuit de catholyte.

9. Electrolyseur sous pression selon l'une des revendications 1 à 8, **caractérisé en ce que** les composants essentiels du système à circuit d'électrolytes, en particulier un séparateur de gaz et/ou un refroidisseur d'électrolytes (19, 20), sont prévus dans le récipient sous pression (2).

10. Electrolyseur sous pression selon la revendication 7, 8 ou 9, **caractérisé en ce que** l'une des parois de séparation (10) est agencée en dessous du bloc de cellules électrolytiques (3) et forme en même temps un support mécanique pour ledit bloc.

11. Electrolyseur sous pression selon l'une des revendications 5 à 10, **caractérisé en ce que** les anodes (11) et les cathodes (12) sont entourées par un élément d'étanchéité (21, 22) qui s'étend à leur périphérie et qui forme une extrémité latérale de la cellule électrolytique (4) respectivement dans la zone de l'anode (11) et dans la zone de la cathode (12) et qui est inséré de manière étanche entre les cadres de cellule (15, 16).

12. Electrolyseur sous pression selon la revendication 11, **caractérisé en ce que** l'anode (11) et la cathode (12) d'une cellule électrolytique (4) sont entourées respectivement par des éléments d'étanchéité (21 ou 22) distincts.

13. Electrolyseur sous pression selon la revendication 12, **caractérisé en ce que** les éléments d'étanchéité respectifs (21, 22) de l'anode (11) et de la cathode (12) sont insérés tous deux de manière étanche entre deux cadres de cellule (15, 16) successifs.

14. Electrolyseur sous pression selon la revendication 11, 12 ou 13, **caractérisé en ce que** les éléments d'étanchéité (21, 22) forment également une fermeture latérale de la cellule électrolytique (4) sur un diaphragme (13) qui est agencé entre l'anode (11) et la cathode (12).

15. Electrolyseur sous pression selon la revendication 12, 13 ou 14, **caractérisé en ce que** le diaphragme (13) est inséré de manière étanche entre l'élément d'étanchéité (21) de l'anode (11) et l'élément d'étanchéité (22) de la cathode (12).

16. Electrolyseur sous pression selon l'une des revendications 11 à 15, **caractérisé en ce que** les éléments d'étanchéité (21, 22) sont agencés à la manière d'un cadre à la périphérie de l'anode (11) et/ou de la cathode (12).

17. Electrolyseur sous pression selon l'une des revendications 11 à 16, **caractérisé en ce que** les éléments d'étanchéité (21, 22) sont conçus pour entourer le bord de l'anode (11) et/ou de la cathode (12) depuis le côté avant jusqu'au côté arrière de ladite anode et/ou de ladite cathode.

18. Electrolyseur sous pression selon la revendication 17, **caractérisé en ce que** les éléments d'étanchéité (21, 22) sont dotés d'une ou plusieurs lèvres d'étanchéité (41, 42) qui s'étendent respectivement à la périphérie de l'anode (11) et à la périphérie de la cathode (12) et qui reposent de manière étanche contre une surface d'étanchéité (45, 46) du cadre de cellule d'anode (15), respectivement du cadre de cellule de cathode (16).

19. Electrolyseur sous pression selon la revendication 18, **caractérisé en ce que** les lèvres d'étanchéité (41, 42) font saillie dans une direction perpendiculaire respectivement à la surface de l'anode (11) et à la surface de la cathode (12) et **en ce que** les surfaces d'étanchéité (45, 46) respectives du cadre de cellule d'anode (15) et du cadre de cellule de cathode (16) sont conçues pour s'étendre parallèlement respectivement à la surface de l'anode (11) et à la surface de la cathode (12).

20. Electrolyseur sous pression selon l'une des revendications 16 à 19, **caractérisé en ce que** les éléments d'étanchéité (21, 22) sont formés en un matériau élastomère.

21. Electrolyseur sous pression selon la revendication 20, **caractérisé en ce que** les éléments d'étanchéité (21, 22) sont formés en revêtant par extrusion les bords respectifs de l'anode (11) et de la cathode (12) par le matériau élastomère.

22. Electrolyseur sous pression selon l'une des revendications 5 à 21, **caractérisé en ce que** deux cellules électrolytiques adjacentes (4) sont séparées l'une de l'autre par une tôle bipolaire (14) qui est entourée par un élément d'étanchéité (24) qui s'étend à sa périphérie et qui forme une extrémité latérale de la cellule électrolytique (4) dans la zone de la tôle bipolaire (14) et est insérée de manière étanche entre les cadres de cellule (15, 16) des cellules électrolytiques adjacentes (4).

23. Electrolyseur sous pression selon la revendication 22, **caractérisé en ce que** l'élément d'étanchéité (24) est agencé de manière à s'étendre à la périphérie de la tôle bipolaire (14) à la manière d'un cadre.

24. Electrolyseur sous pression selon les revendications 22 ou 23, **caractérisé en ce que** l'élément d'étanchéité (24) est agencé sur un côté de la tôle bipolaire (14).

25. Electrolyseur sous pression selon les revendications 22 ou 23, **caractérisé en ce que** l'élément d'étanchéité (24) est conçu pour être agencé autour du bord de la tôle bipolaire (14) du côté avant au côté arrière de ce bord.

26. Electrolyseur sous pression selon l'une des revendications 22 à 25, **caractérisé en ce que** l'élément d'étanchéité (24) est doté d'une ou plusieurs lèvres d'étanchéité (44) qui s'étendent à la périphérie de la tôle bipolaire (14) et qui reposent de manière étanche contre une surface d'étanchéité (47) du cadre de cellule d'anode (15) ou du cadre de cellule de cathode (16), ou contre la tôle bipolaire (14) proprement dite.

27. Electrolyseur sous pression selon la revendication 26, **caractérisé en ce que** les lèvres d'étanchéité (44) font saillie dans une direction perpendiculaire à la surface de la tôle bipolaire (14) et **en ce que** les surfaces d'étanchéité (46, 47) respectives du cadre de cellule d'anode (15) et du cadre de cellule de cathode (16) sont conçues de manière à s'étendre parallèlement à la surface de la tôle bipolaire (14).

28. Electrolyseur sous pression selon l'une des revendications 23 à 27, **caractérisé en ce que** l'élément d'étanchéité (24) est formé en un matériau élastomère.

29. Electrolyseur sous pression selon la revendication 28, **caractérisé en ce que** l'élément d'étanchéité (24) est formé en revêtant par extrusion le bord de la tôle bipolaire (14) par le matériau élastomère.

30. Electrolyseur sous pression selon l'une des revendications 1 à 29, **caractérisé en ce que** les chambres (7, 8) sont reliées l'une à l'autre dans le récipient sous pression (2) en un point géodésiquement bas pour permettre un équilibrage des niveaux de l'anolyte et du catholyte.

31. Electrolyseur sous pression selon la revendication 30, **caractérisé en ce que** les chambres (7, 8) sont reliées par un conduit de liaison qui s'étend à l'extérieur du récipient sous pression (2).

32. Electrolyseur sous pression selon la revendication 30, **caractérisé en ce que** les chambres (7, 8) sont reliées l'une à l'autre en un point géodésiquement bas dans le récipient sous pression (2) par l'intermédiaire d'une ouverture ou d'une membrane prévue dans la séparation.

33. Electrolyseur sous pression selon l'une des revendications 1 à 32, **caractérisé en ce que** le récipient sous pression (2) est constitué d'un matériau électriquement non conducteur.

34. Electrolyseur sous pression selon l'une des revendications 1 à 32, **caractérisé en ce que** les chambres (7, 8) délimitées par le logement (5) du bloc de cellules électrolytiques (3) et par le côté intérieur du récipient sous pression (2) sont délimitées par une enveloppe formée d'un matériau électriquement isolant.

35. Electrolyseur sous pression selon l'une des revendications 1 à 32, **caractérisé en ce que** sur son côté qui fait face aux chambres (7, 8), le logement (5) du bloc de cellules électrolytiques (3) est doté d'un revêtement ou d'un habillage électriquement isolant et/ou **en ce que** sur son côté intérieur, le récipient sous pression (2) est doté d'un revêtement ou d'un habillage électriquement isolant.

36. Electrolyseur sous pression selon la revendication 9, **caractérisé en ce que** dans la chambre (7) et dans la chambre (8), la séparation des gaz a lieu essentiellement dans des zones qui sont situées géodésiquement au-dessus du bloc de cellules électrolytiques (3).

37. Electrolyseur sous pression selon la revendication 36, **caractérisé en ce que** des accessoires de coalescence des gaz qui présentent la forme de tissus tricotés et/ou d'émetteurs à ultrasons et/ou de coudes d'écoulement sont agencés dans les zones de séparation des gaz.

38. Electrolyseur sous pression selon l'une des revendications 1 à 37, **caractérisé en ce qu'**est prévu un récipient (31) d'eau d'alimentation qui est relié à une source d'alimentation en eau par l'intermédiaire d'un conduit (32) de remplissage d'eau d'alimentation qui comprend une soupape (33) de remplissage d'eau d'alimentation et à une zone inférieure de l'une des chambres séparées (7, 8) par l'intermédiaire d'un conduit (34) d'admission d'eau d'alimentation qui comprend une soupape (35) d'admission d'eau d'alimentation et qui est relié à une zone supérieure de l'une des chambres séparées (7, 8) par l'intermédiaire d'un conduit sous pression (36) qui comprend une soupape sous pression (37) et qui peut en outre être purgé dans l'environnement par l'intermédiaire d'un conduit d'évent (38) qui comprend une soupape d'évent (39), la zone supérieure de l'une des chambres séparées (7, 8) étant remplie de l'un des gaz produits pendant le fonctionnement de l'électrolyseur sous pression.

39. Electrolyseur sous pression selon la revendication 38, **caractérisé en ce que** l'une des chambres séparées, à laquelle le réservoir (31) d'eau de réserve est relié par l'intermédiaire du conduit (34) d'admission d'eau d'alimentation et par l'intermédiaire du conduit sous pression (36) est un composant de l'autre chambre séparée (8) qui forme le circuit de catholyte.

40. Procédé de remplissage d'un électrolyseur sous pression selon les revendications 38 ou 39, **caractérisé par** les étapes qui consistent à :
a) remplir sans pression le réservoir (31) d'eau d'alimentation par l'intermédiaire du conduit (32) de remplissage d'eau d'alimentation en ouvrant la soupape (33) de remplissage d'eau d'alimentation, la soupape de ventilation (39) et en fermant la soupape sous pression (37) et la soupape (35) d'admission d'eau d'alimentation,
b) fermer la soupape de ventilation (39) et la soupape (33) de remplissage d'eau d'alimentation,
c) ouvrir la soupape sous pression (37) pour amener par l'intermédiaire du conduit sous pression (36) le réservoir (31) d'eau d'alimentation à la pression qui règne dans le récipient sous pression (2),
d) ouvrir la soupape (35) d'admission d'eau d'alimentation pour, de manière dosée, admettre dans le récipient sous pression (2) de l'eau d'alimentation qui provient du réservoir d'eau de réserve (31) et
e) fermer la soupape (35) d'admission d'eau d'alimentation.

41. Procédé selon la revendication 40, **caractérisé en ce que** l'ajout dosé d'eau d'alimentation du réservoir d'eau d'alimentation (31) dans le récipient sous pression (2) a lieu par l'action de la gravité, le réservoir (31) d'eau d'alimentation étant agencé spatialement au-dessus du récipient sous pression (2).

42. Procédé selon la revendication 40, **caractérisé en ce que** l'ajout dosé d'eau d'alimentation depuis le réservoir (31) d'alimentation en eau jusque dans le récipient sous pression (2) est réalisé au moyen d'une pompe d'alimentation en eau prévue dans le conduit (34) d'admission d'alimentation en eau.
